# EUROPÄISCHE PATENTANMELDUNG

(11) **EP 1 650 636 A2**
(43) Veröffentlichungstag der Anmeldung: **26.04.2006**
(21) Anmeldenummer: 05021077.2
(22) Anmeldetag: 27.09.2005
(51) Int. Cl.: G06F 1/18

(54) **Baugruppenträger**

(30) Priorität: 22.10.2004 DE 102004051592
(71) Anmelder: Fujitsu Siemens Computers GmbH, 80807 München (DE)
(72) Erfinder: Fietz, Ralf-Peter, 33104 Paderborn (DE)
(74) Vertreter: Epping - Hermann - Fischer

(57) **Zusammenfassung**

Die Erfindung betrifft einen Baugruppenträger für ein Serversystem, welcher ein Slotfeldabschnitt (1) und einen Käfig (2) aufweist, wobei in dem Käfig (2) Einsteckkarten (4 bis 6) geführt eingesteckt werden können.

Zur Vermeidung von Kurzschlüssen zwischen den Einsteckkarten ist der Käfig (2) erfindungsgemäß aus Kunststoff ausgebildet.

## Beschreibung

Die Erfindung betrifft einen Baugruppenträger für ein Serversystem mit einem Slotfeldabschnitt und einem Käfig, wobei in dem Käfig Einsteckkarten aufgenommen werden können.

Derartige Baugruppenträger sind aus Serversystemen bekannt, welche eine geringe Höhe, in der Regel zwei Höheneinheiten aufweisen, und somit nur Low Profile-Karten aufnehmen können. Wünscht der Kunde jedoch Standard-PCI-Karten zu verwenden, ist dieses bei einem Serversystem mit nur zwei Höheneinheiten nicht möglich. Um Standard-PCI-Karten einsetzen zu können, werden daher Baugruppenträger eingesetzt, welche eine Low Profile-PCI-Card aufnehmen können und in welchen wiederum drei Standard-PCI-Einsteckkarten eingesteckt werden können. Um der Low Profile-PCI-Card und den drei Standard-PCI-Einsteckkarten den notwendigen Halt und die notwendige Stabilität zu verleihen, muss der Baugruppenträger mit einem Käfig ausgestattet sein. Heute bekannte Lösungen sehen vor, den Käfig als Metallgehäuse auszubilden, in welchem dann die Risercard verschraubt ist. Zur Vermeidung von Kurzschlüssen müssen derartige Käfige aus Metall von innen mit Isolierfolien ausgekleidet werden. Doch die komplizierte Herstellung des Käfigs in der Regel als Blechbiegeteil, welches im Nachhinein an entsprechenden Stellen mit Isolierfolie beklebt werden muss, und mit dem Slotfeldabschnitt verbunden werden muss, stellt keinen unbeachtlichen Kostenfaktor dar. Für einen Kunden ist es daher oft besser, ein Serversystem mit einer Bauhöhe zu wählen, in welchem Standard-PCI-Karten senkrecht eingesteckt werden können. Da jedoch auch bei Serversystemen Raum bzw. Platz eine immer größere Rolle spielt und die Kunden bei geringen Preisunterschieden immer zur Lösung mit geringerem Bauraum tendieren, ist es Aufgabe der Erfindung, einen Baugruppenträger aufzuzeigen, welcher auch bei Serversystemen mit niedriger Bauhöhe mit geringem Aufwand den Einsatz von Standard-PCI-Steckkarten erlaubt.

Die Aufgabe wird erfindungsgemäß dadurch gelöst, dass der Käfig des Baugruppenträgers aus Kunststoff hergestellt ist.
Die Ausbildung des Käfigs des Baugruppenträgers aus Kunststoff hat den großen Vorteil, dass die nachträgliche isolierende Auskleidung entfallen kann und der Käfig in einem Arbeitsschritt wesentlich kostengünstiger wie als Blechbiegeteil mit der nachträglichen Auskleidung herstellbar ist. Ein weiterer Vorteil ist, dass bei der Ausbildung des Käfigs aus Kunststoff mit geringem Aufwand sämtliche Funktionen in den Käfig integriert werden können, ohne sie durch additive Arbeitsgänge, Materialien oder Bauteile realisieren zu müssen.

Gemäß einer vorteilhaften Weiterbildung ist so z.B. an dem Käfig eine Schnappvorrichtung vorgesehen, über welche die Risercard schraubenlos in den Käfig eingebaut werden kann.

Vorteilhafterweise ist in dem Käfig auch gegenüberliegend vom Slotfeld eine hintere Kartenführung integriert. Bisher war es bekannt, an den Käfigen aus Metall gegenüberliegend vom Slotfeldabschnitt eine hintere Kartenführung als zusätzlich montiertes loses Einzelteil auszubilden, da man diese aus Gründen der Isolierung nicht aus einem Blech mit dem Käfig fertigen konnte.

Vorteilhafterweise ist der Baugruppenträger über den Slotfeldabschnitt sowie einen gegenüberliegenden Abstützpunkt im Gehäuse des Serversystems fixiert. Durch die Ausbildung des Käfigs aus Kunststoff kann der Abstützpunkt z.B. durch eine Verhakung leicht im Kunststoffteil des Käfigs realisiert werden.

Um die Montage bzw. die Demontage der Risercard bzw. der Einsteckkarten im Baugruppenträger zu erleichtern, ist dieser günstigerweise auch aus transparentem Kunststoff ausgebildet. Darüber hinaus ergibt sich dadurch ein sehr ästhetischer Gesamteindruck der gesamten Baugruppe.

Aus Gründen der EMV-Dichtigkeit ist der Slotfeldabschnitt günstigerweise aus Metall ausgebildet und der Käfig formschlüssig mit dem Slotfeldabschnitt verbunden.

Um das Austauschen der gesamten Baugruppe aus dem Serversystem zu erleichtern, ist der gesamte Baugruppenträger vorzugsweise aus dem Serversystem herausnehmbar bzw. nachträglich einsetzbar ausgebildet.

Nachfolgend wird anhand eines in den Zeichnungen dargestellten Ausführungsbeispieles die Erfindung näher erläutert. In den Zeichnungen zeigt:
Figur 1 eine Schrägansicht des Baugruppenträgers mit eingesetzter Risercard,
Figur 2 eine relativ zur Figur 1 um 180° gedrehte Schrägansicht des Baugruppenträgers mit zusätzlich eingesetzten Einsteckkarten,
Figur 3 die Ansicht aus Figur 2 ohne Einsteckkarten,
Figur 4 die Ansicht aus Figur 1 ohne Risercard,
Figur 5 den Slotwinkelabschnitt und den Käfig in demontierter Stellung.

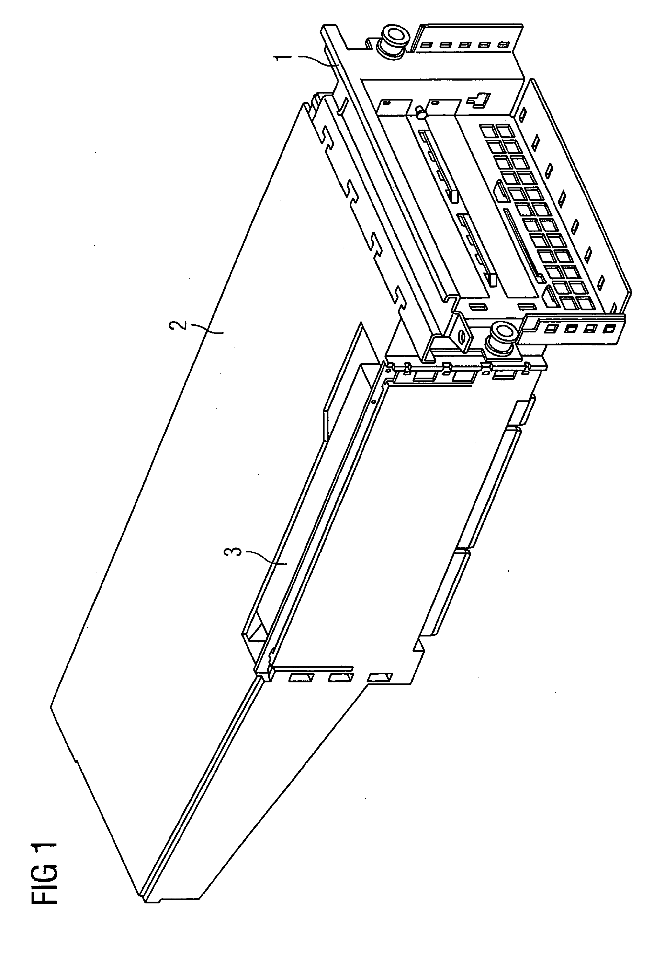

Figur 1 zeigt einen Baugruppenträger in Schrägansicht mit einem Slotfeldabschnitt 1 und einem Käfig 2, wobei der Käfig 2 so ausgebildet ist, dass er eine PCI-Risercärd 3 aufnehmen kann. Die PCI-Risercard 3 ist als Low Profile-PCI-Card ausgebildet, in welche maximal drei weitere Einsteckkarten eingesteckt werden können.

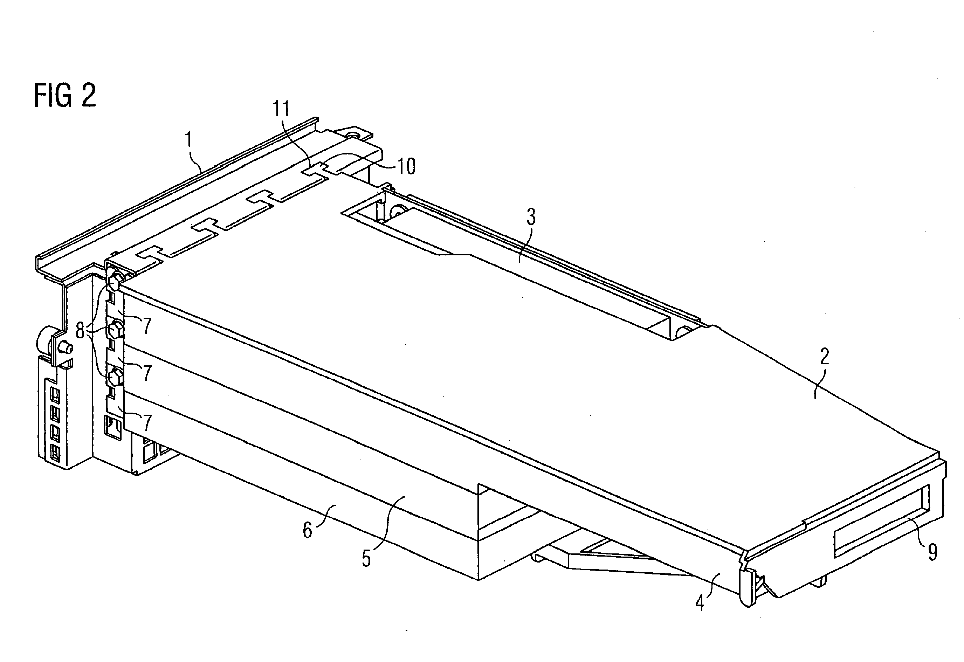

Figur 2 zeigt den Baugruppenträger aus Figur 1 um 180° gedreht, wobei in die Risercard 3 weitere Einsteckkarten 4, 5 und 6 eingesteckt sind. Die Einsteckkarte 4 überstreckt sich auch über die komplette Länge des Käfigs 2, während die Einsteckkarten 5 und 6 wesentlich kürzer ausgebildet sind. Auf der Seite des Slotfeldabschnittes 1 weisen die Einsteckkarten 4, 5, 6 Slotwinkelbleche 7 auf, die über Schrauben 8 mit dem Slotfeldabschnitt 1 verschraubt sind. Durch die Slotwinkelbleche 7 können die Einsteckkarten auch extern kontaktiert werden.

Insbesondere bei langen Einsteckkarten, wie der Einsteckkarte 4, besteht stets das Problem der Führung, da bei mangelnder Führung die Anschlüsse, insbesondere am Steckplatz zu stark belastet werden. Der Käfig 2 weist hierzu eine Führung 9 auf, welche formschlüssig die Steckkarte 4 an ihrem Ende, welches dem Slotfeldabschnitt 1 gegenüberliegt, umfasst. Der Käfig 2 ist erfindungsgemäß aus Kunststoff ausgebildet und formschlüssig mit dem Slotfeldabschnitt 1 verbunden. Hierzu sind an dem Käfig 2 T-förmige Vorsprünge 10 ausgebildet, welche in entsprechende Aussparungen 11 am Slotfeldabschnitt 1 lediglich eingesteckt werden müssen.

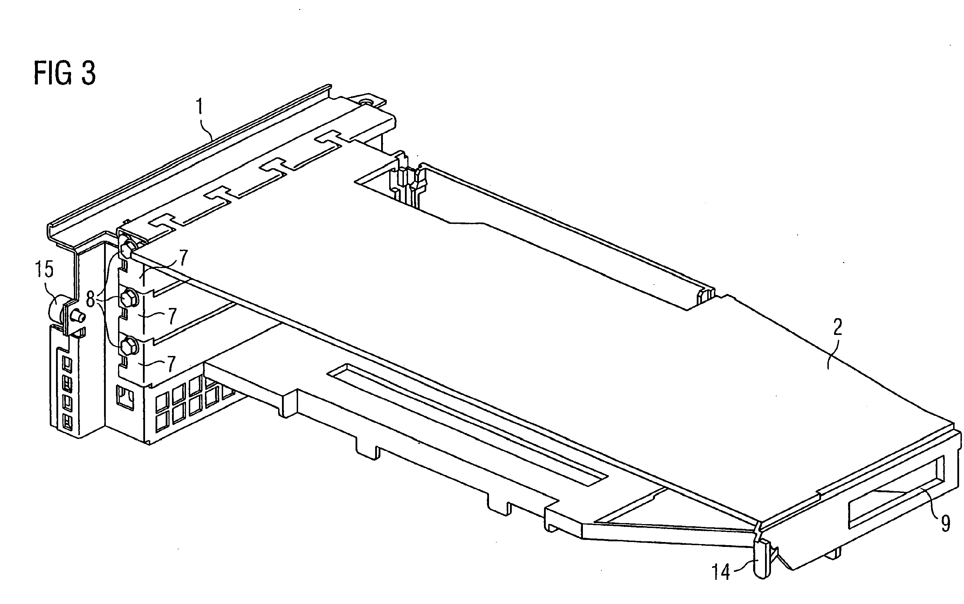

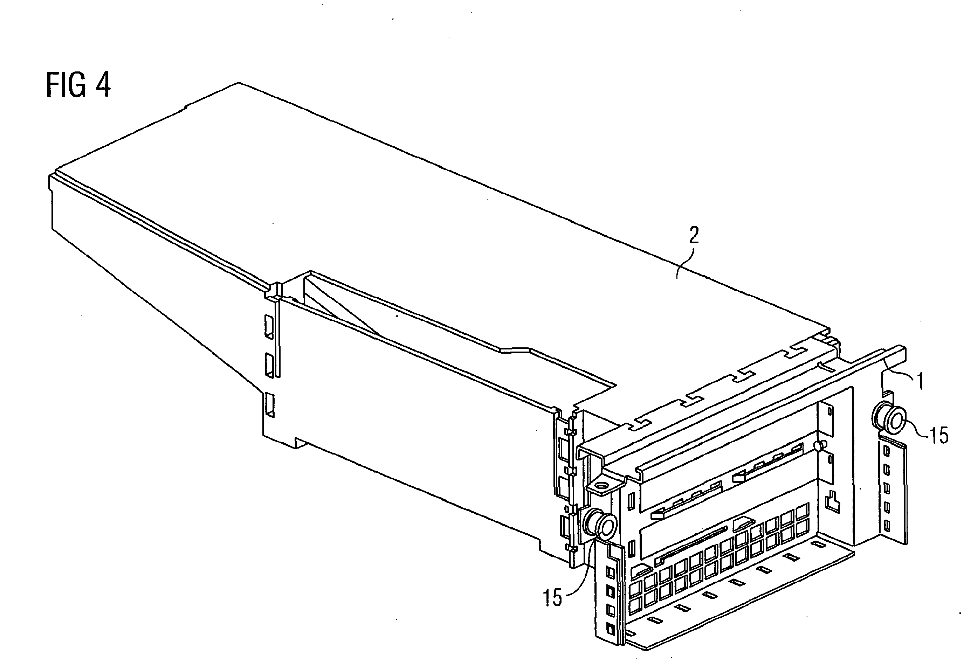

Die Figuren 3 und 4 zeigen die Figur 1 und 2 ohne Risercard 3 und Einsteckkarten 4 bis 6.

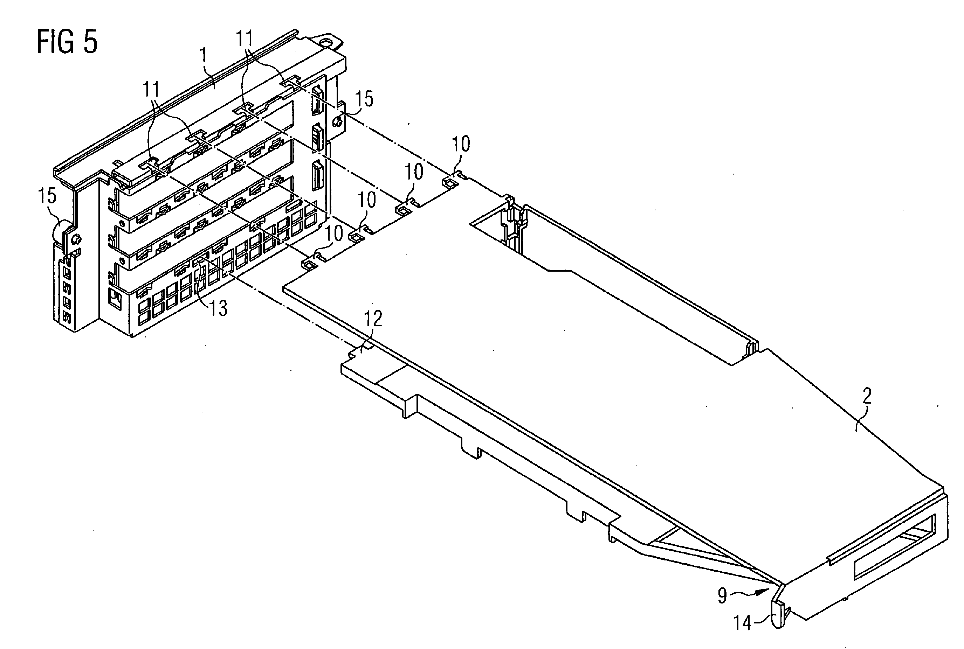

In Figur 5 ist der Slotfeldabschnitt 1 und der Käfig 2 in demontierter Form dargestellt. Durch das Zusammenwirken der Vorsprünge 10 und der Aussparungen 11, wie in den Figuren 1 bis 4 dargestellt, wird die formschlüssige Verbindung zwischen dem Käfig 2 aus Kunststoff und dem Slotfeldabschnitt 1, welcher in der Regel aus EMV-Gründen aus Metall hergestellt ist, erreicht.

Zusätzlich sind an der unteren Seite des Käfigs 2 weitere Vorsprünge 12 vorgesehen, welche in entsprechende weitere Aussparungen 13 im Slotfeldabschnitt 1 eingesteckt werden.

Die Risercard 3 kann schraubenlos in den Käfig 2 eingesteckt werden und die Einsteckkarten 4-6 müssen lediglich in den Käfig 2 horizontal eingesteckt werden, wobei diese am Slotfeldabschnitt 1 bzw. im Käfig 2 geführt sind. Insbesondere die oberste Einsteckkarte 4 ist durch die Führung 9 am gegenüberliegenden Ende des Slotfeldabschnittes 1 exakt geführt. Ebenso ist es auch möglich, den gesamten Baugruppenträger in das Serversystem einzusetzen bzw. herauszunehmen. Hierzu sind am Slotwinkelfeld zwei Verschraubungen 15 ausgebildet und am gegenüberliegenden Ende des Käfigs 2 ein entsprechender Abstützpunkt 14. Der Abstützpunkt 14 kann z.B. so geformt sein, dass dieser lediglich in das Gehäuse des Serversystems bzw. Einschubes eingehakt werden muss.

In den Figuren ist das Gehäuse des Serversystems bzw. der Einschub nicht dargestellt, jedoch handelt es sich um einen allgemein bekannten Einschub, wie er in Serverracks eingeschoben wird bzw. ein Gehäuse für ein Serversystem, welches in einem Serverrack eingebaut wird, in welchem horizontal ein Motherboard aufgenommen ist, welches Einsteckplätze, insbesondere PCI-Einsteckplätze, aufweist, in welche die Risercard beim Einbau des Baugruppenträgers eingesteckt werden kann.

Bezugszeichenliste
- 1: Slotwinkelabschnitt
- 2: Käfig
- 3: Risercard
- 4: Einsteckkarte
- 5: Einsteckkarte
- 6: Einsteckkarte
- 7: Slotwinkelblech
- 8: Schrauben
- 9: Führung
- 10: Vorsprünge
- 11: Aussparung
- 12: weitere Vorsprünge
- 13: weitere Aussparung
- 14: Abstützpunkt
- 15: Verschraubung des Slotwinkelabschnittes

## Patentansprüche

1. Baugruppenträger für ein Serversystem mit einem Slotfeldabschnitt (1) und einem Käfig (2), wobei in dem Käfig (2) Einsteckkarten (4, 5, 6) aufgenommen werden können,
**dadurch gekennzeichnet, dass**
der Käfig (2) des Baugruppenträgers aus Kunststoff hergestellt ist.

2. Baugruppenträger nach Anspruch 1,
**dadurch gekennzeichnet, dass**
der Baugruppenträger eine Risercard (3) aufnehmen kann und in die Risercard (3) innerhalb des Käfigs (2) des Baugruppenträgers Einsteckkarten (4 bis 6) eingesteckt werden können.

3. Baugruppenträger nach Anspruch 1 oder 2,
**dadurch gekennzeichnet, dass**
die Risercard (3) als Low Profile-Einsteckkarte ausgebildet ist und beim Einbau des Baugruppenträgers in einen Steckplatz auf einem Motherboard in einem Serversystem eingesteckt werden kann.

4. Baugruppenträger nach einem der Ansprüche 1 bis 3,
**dadurch gekennzeichnet, dass**
die Einsteckkarten, die innerhalb des Käfigs des Baugruppenträgers in die Risercard (3) eingesteckt werden können, Einsteckkarten (4 bis 6) in Standardgröße sind.

5. Baugruppenträger nach einem der Ansprüche 1 bis 4,
**dadurch gekennzeichnet, dass**
das Serversystem in der Höhe maximal Low Profile-Einsteckkarten aufnehmen kann.

6. Baugruppenträger nach einem der Ansprüche 1 bis 5,
**dadurch gekennzeichnet, dass**
für den Einbau der Risercard (3) in dem Käfig (2) Schnappvorrichtungen vorgesehen sind.

7. Baugruppenträger nach einem der Ansprüche 1 bis 6,
**dadurch gekennzeichnet, dass**
das Serversystem als Einschub in ein Rack oder als ein in ein Rack einsetzbares Gehäuse ausgebildet ist.

8. Baugruppenträger nach einem der Ansprüche 1 bis 7,
**dadurch gekennzeichnet, dass**
die Einsteckkarten (4 bis 6) am Slotfeldabschnitt (1) und am gegenüberliegenden Ende des Baugruppenträgers geführt sind.

9. Baugruppenträger nach einem der Ansprüche 1 bis 8,
**dadurch gekennzeichnet, dass**
der Baugruppenträger im Einschub oder Gehäuse des Serversystems über den Slotfeldabschnitt (1) und am gegenüberliegenden Ende über einen Abstützpunkt (14) fixiert ist.

10. Baugruppenträger nach einem der Ansprüche 1 bis 9,
**dadurch gekennzeichnet, dass**
der Käfig (2) aus transparentem Kunststoff ausgebildet ist.

11. Baugruppenträger nach einem der Ansprüche 1 bis 10,
**dadurch gekennzeichnet, dass**
die Steckplätze auf dem Motherboard des Serversystems PCI-Steckplätze und die Steckplätze auf der Risercard (3) ebenfalls PCI-Steckplätze sind.

12. Baugruppenträger nach einem der Ansprüche 1 bis 11,
**dadurch gekennzeichnet, dass**
die Einsteckkarten (4 bis 6) Slotwinkelbleche (7) aufweisen und durch den Slotfeldabschnitt von außen bei entsprechender Ausbildung der Einsteckkarte angeschlossen werden können.

13. Baugruppenträger nach einem der Ansprüche 1 bis 12,
**dadurch gekennzeichnet, dass**
der Slotfeldabschnitt (1) aus Metall ausgebildet ist und der Käfig (2) formschlüssig mit dem Slotfeldabschnitt (1) verbindbar ist.

14. Baugruppenträger nach einem der Ansprüche 1 bis 13,
**dadurch gekennzeichnet, dass**
der Baugruppenträger aus dem Serversystem herausnehmbar ist.
